(19) Europäisches Patentamt
European Patent Office
Office européen des brevets

(11) **EP 2 169 426 A1**

(12) **EUROPEAN PATENT APPLICATION**

(43) Date of publication:
**31.03.2010 Bulletin 2010/13**

(51) Int Cl.:
*G01S 7/52* (2006.01)  *G01S 15/89* (2006.01)
*G06T 5/00* (2006.01)  *G06T 5/20* (2006.01)

(21) Application number: **09012104.7**

(22) Date of filing: **23.09.2009**

(84) Designated Contracting States:
**AT BE BG CH CY CZ DE DK EE ES FI FR GB GR HR HU IE IS IT LI LT LU LV MC MK MT NL NO PL PT RO SE SI SK SM TR**
Designated Extension States:
**AL BA RS**

(30) Priority: **30.09.2008 JP 2008255228**

(71) Applicant: **Fujifilm Corporation Tokyo 106-8620 (JP)**

(72) Inventor: **Katsuyama, Kimito Kanagawa-ken (JP)**

(74) Representative: **Klunker . Schmitt-Nilson . Hirsch Patentanwälte Destouchesstrasse 68 80796 München (DE)**

(54) **Ultrasound signal processing apparatus and method for determining attenuation**

(57) According to an ultrasound signal processing apparatus (10) and method of the present invention, an attenuation factor of ultrasound inside a subject (90) is derived from changes in the phase of an ultrasound echo in a depth direction of the subject, in a simple and convenient way. Accordingly, a plurality of band-pass filters that have different center frequencies, and signal processing circuits (40) that perform individual detection and logarithmic compression for each band are not required.

FIG.7

**Description**

BACKGROUND OF THE INVENTION

Field of the Invention

The present invention relates to an ultrasound signal processing apparatus and method that transmit ultrasound towards a subject, receive an ultrasound echo from inside the subject, and derive an attenuation factor of ultrasound inside the subject.

Description of the Related Art

Japanese Patent Application Laid-Open No. 7-51270 discloses a configuration that significantly improves the visibility of minute differences in contrast by dividing a reception signal of an ultrasound echo into different bands using a plurality of band-pass filters, and attaching information regarding attenuation that accompanies ultrasound propagation within an organism by performing a weighted addition or a hue addition with respect to individually detected reception signals.

SUMMARY OF THE INVENTION

However, according to the configuration described in Japanese Patent Application Laid-Open No. 7-51270, a plurality of band-pass filters that have different center frequencies, and a signal processing circuit that performs individual detection and logarithmic compression for each band are required. More specifically, the hardware configuration is complicated and it is difficult to reduce the cost of the device.

The present invention has been made in consideration of these circumstances, and an object of the invention is to provide an ultrasound signal processing apparatus and method that can simply and conveniently determine an attenuation factor of ultrasound inside a subject.

To achieve the foregoing object, the present invention provides an ultrasound signal processing apparatus comprising: an ultrasound transmitting/receiving device which transmits ultrasound towards a subject and receives an ultrasound echo from inside the subject to generate a reception signal that represents the ultrasound echo; a phase information acquisition device which acquires phase information showing a phase of the ultrasound echo from the reception signal; and an attenuation factor deriving device which derives an attenuation factor of the ultrasound inside the subject based on changes in the phase of the ultrasound echo in a depth direction of the subject.

According to this configuration, since an attenuation factor of ultrasound inside a subject is derived from changes in the phase of an ultrasound echo in a depth direction of the subject, the attenuation factor can be determined simply and conveniently. Accordingly, a plurality of band-pass filters that have different center frequencies, and a signal processing circuit that performs individual detection and logarithmic compression for each band and the like are not required.

In the present invention, an aspect in which the attenuation factor deriving device derives the attenuation factor by determining a second-order differential value of the phase of the ultrasound echo in the depth direction of the subject is preferable.

According to the aspect, the attenuation factor can be derived appropriately and with ease.

In the present invention, an aspect in which the attenuation factor deriving device derives the attenuation factor based on a phase change excluding a speckle component is preferable.

According to the aspect, it is possible to derive an accurate attenuation factor that corresponds to tissue characteristics of a subject.

For example, the attenuation factor deriving device derives the attenuation factor by taking a phase difference for which a frequency is greatest in a region of interest of a tomographic section of the subject as a representative value of the region of interest, and differentiating the representative value with respect to the depth direction.

For example, the attenuation factor deriving device derives the attenuation factor by dividing a tomographic section of the subject into speckle regions and non-speckle regions, determining a mean value of phase differences that belong to the non-speckle regions for each region of interest, taking the mean value as a representative value of the region of interest, and differentiating the representative value with respect to the depth direction.

For example, the attenuation factor deriving device derives the attenuation factor by dividing a tomographic section of the subject into speckle regions and non-speckle regions, and determining a second-order differential value of phases of the ultrasound echo belonging to the non-speckle regions.

In the present invention, preferably the ultrasound transmitting/receiving device transmits a Gaussian pulse.

In the present invention, the phase information acquisition device utilizes data in which a resolution of a phase in an arraying direction of elements of the ultrasound transmitting/receiving device is greater than or equal to an interval between the elements.

In the present invention, the ultrasound transmitting/receiving device is capable of generating the reception data of two sound rays or more in an arraying direction of the elements of the ultrasound transmitting/receiving device with a single ultrasound transmission, and the phase information acquisition device utilizes the reception data of two sound rays or more that is generated with the ultrasound transmitting/receiving device. In the present invention, an aspect which comprises an attenuation factor tomogram generating device which generates an attenuation factor tomogram that shows a distribution of attenuation factors in a tomographic section of the subject based on the attenuation factors derived by the attenuation factor deriving device is preferable.

According to the aspect, it is possible to make an appropriate diagnosis by viewing the distribution of attenuation factors in a tomographic section of the subject.

In the present invention, a form which comprises an amplitude information acquisition device which acquires amplitude information that shows an amplitude of the ultrasound echo from a reception signal of the ultrasound echo; an amplitude tomogram generating device which generates an amplitude tomogram based on the amplitude information acquired with the amplitude information acquisition device; and an image synthesis device which superimposes the attenuation factor tomogram and the amplitude tomogram with respect to each other is preferable.

According to this configuration, because the amplitude tomogram and the attenuation factor tomogram are superimposed with respect to each other, an appropriate diagnosis can be made.

For example, the image synthesis device modulates the brightness or color of the amplitude tomogram in accordance with the attenuation factor tomogram.

In the present invention, an aspect which comprises an amplitude information acquisition device which acquires amplitude information that shows an amplitude of the ultrasound echo from a reception signal of the ultrasound echo; an amplitude tomogram generating device which generates an amplitude tomogram based on the amplitude information acquired with the amplitude information acquisition device; a display section capable of displaying an image; and a display control device which performs control to cause the attenuation factor tomogram and the amplitude tomogram to display side by side on the display section is preferable.

According to the aspect, an amplitude tomogram and an attenuation factor tomogram can be easily viewed in association with each other, to thereby enable an appropriate diagnosis.

In the present invention, an aspect that comprises a mode switching device which switches between a mode that outputs the attenuation factor tomogram and a mode that does not output the attenuation factor tomogram is preferable.

In the present invention, a configuration that comprises a mode switching device which switches between a mode that synthesizes the attenuation factor tomogram and the amplitude tomogram and a mode that does not synthesize the amplitude tomogram is preferable.

Further, the present invention provides an ultrasound signal processing method comprising the steps of: transmitting ultrasound towards a subject and receiving an ultrasound echo from the subject; acquiring phase information that shows a phase of the ultrasound echo from a reception signal that represents the ultrasound echo; and deriving an attenuation factor of the ultrasound inside the subject based on changes in the phase of the ultrasound echo in a depth direction of the subject.

According to the present invention, an attenuation factor of ultrasound inside a subject can be simply and conveniently determined.

BRIEF DESCRIPTION OF THE DRAWINGS

Fig. 1 is an explanatory drawing that is used to explain a positional relationship between an ultrasound probe and a subject;

Fig. 2A is an amplitude tomogram of a subject comprising water and agar, Fig. 2B is a phase difference tomogram of the subject shown in Fig. 2A, Fig. 2C is an amplitude tomogram of a subject in which a layer of water is thicker than in the subject shown in Fig. 2A, and Fig. 2D is a phase difference tomogram of the subject shown in Fig. 2C;

Fig. 3 is a histogram of phase differences in regions of interest in the phase difference tomograms shown in Figs. 2B and 2D;

Fig. 4A is an amplitude tomogram of a subject comprising ethanol and agar, Fig. 4B is a phase difference tomogram of the subject shown in Fig. 4A, Fig. 4C is an amplitude tomogram of a subject in which a layer of ethanol is thicker than in the subject shown in Fig. 4A, and Fig. 4D is a phase difference tomogram of the subject shown in Fig. 4C;

Fig. 5 is a histogram of phase differences in regions of interest in the phase difference tomograms shown in Figs. 4B and 4D;

Fig. 6 is a view that shows the relation between the depth of a reflection position inside a subject and a phase difference;

Fig. 7 is a block diagram that shows an example of the configuration of an ultrasound diagnostic apparatus that includes the ultrasound signal processing apparatus according to the present invention;

Fig. 8 is a view that illustrates an abbreviated flow of one example of ultrasound signal processing according to the present invention;

Fig. 9 is a block diagram that illustrates an example of the configuration of an attenuation factor deriving section according to a first embodiment;

Fig. 10 is a flowchart that illustrates an example of the flow of attenuation factor derivation processing according to the first embodiment;

Fig. 11A is an explanatory drawing that is used to explain a region of interest; Fig. 11B is an explanatory drawing that is used to explain that a phase difference at the frequency maximum in a region of interest is obtained as a representative value of the region of interest; and Fig. 11C is an explanatory drawing that is used for explaining a phase difference representative value tomogram that comprises representative values of each region of interest;

Fig. 12 is a block diagram that shows an example of the configuration of the attenuation factor deriving section according to a second embodiment;

Fig. 13 is a flowchart that shows an example of the flow of attenuation factor derivation processing in the second embodiment; and

Figs. 14A and 14B are explanatory views that illustrate results obtained by separating an amplitude tomogram into speckle regions and non-speckle regions.

## DETAILED DESCRIPTION OF THE PREFERRED EMBODIMENTS

Hereunder, embodiments of the present invention are described in detail in accordance with the attached drawings.

<Principles of the present invention>

First, the principles of the present invention are explained.

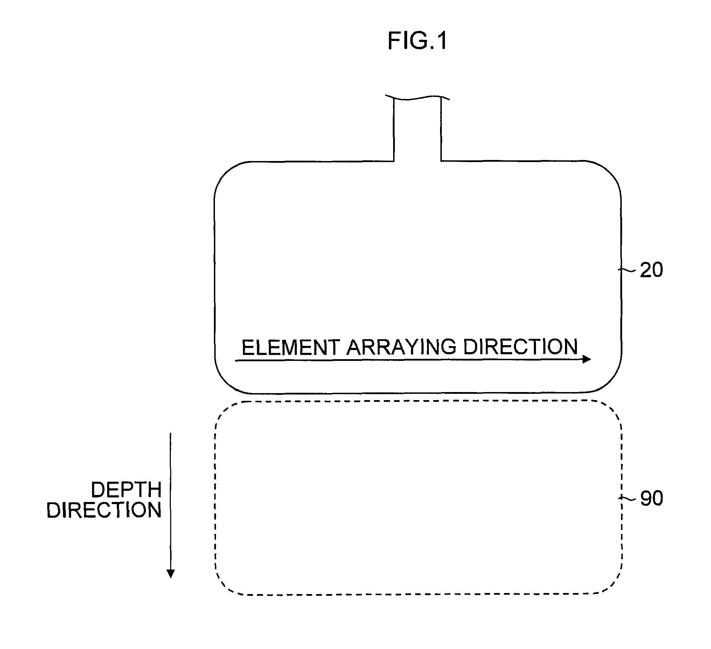

In Fig. 1, in an ultrasound probe 20, a plurality of ultrasound transmitting/receiving elements are arrayed that transmit ultrasound towards a subject 90, and receive reflected waves (an ultrasound echo) from inside the subject 90 to generate a reception signal that represents an ultrasound echo.

Hereunder, a depth direction of the subject 90 is also referred to as the "distance direction". Further, a direction in which the ultrasound transmitting/receiving elements are arrayed (element arraying direction) is also referred to as the "scan direction".

In order to facilitate the description a case is described hereunder using as an example an ultrasound probe 20 having ultrasound transmitting/receiving elements that are one-dimensionally arrayed. However, the present invention can also be applied to a case in which ultrasound transmitting/receiving elements are two-dimensionally arrayed.

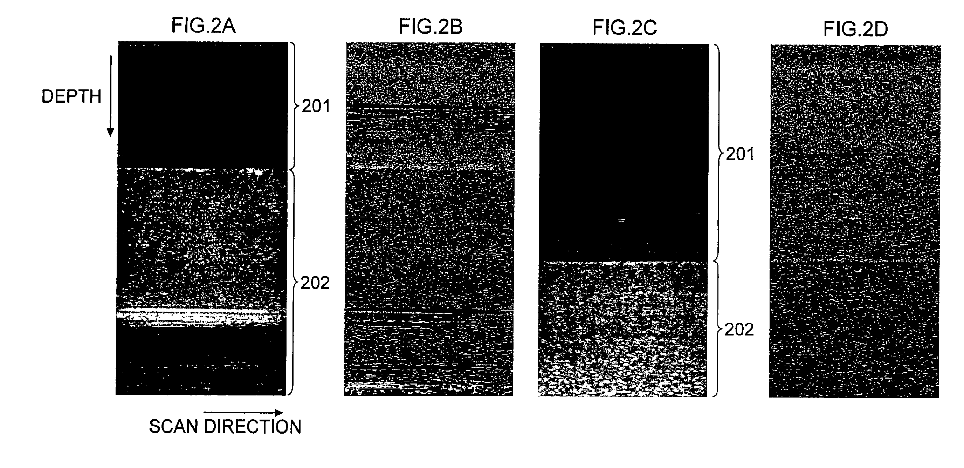

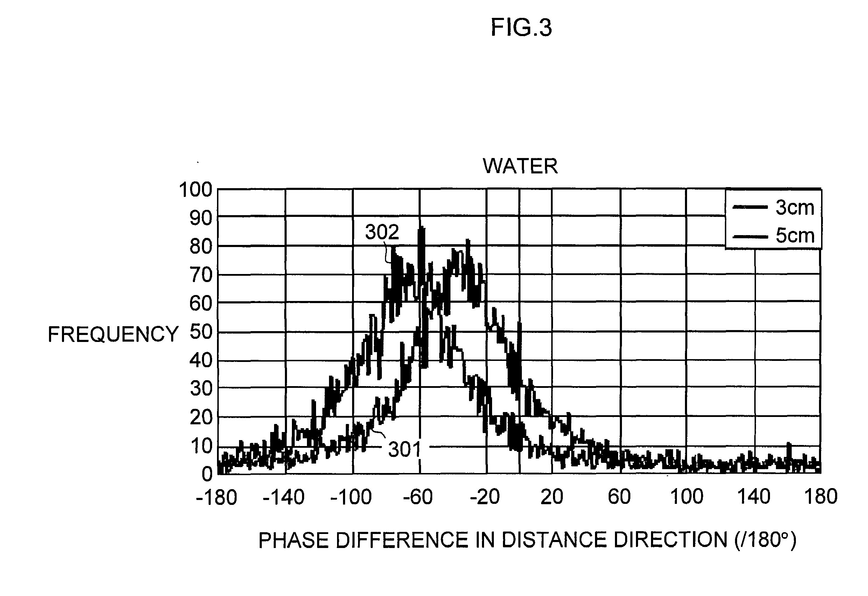

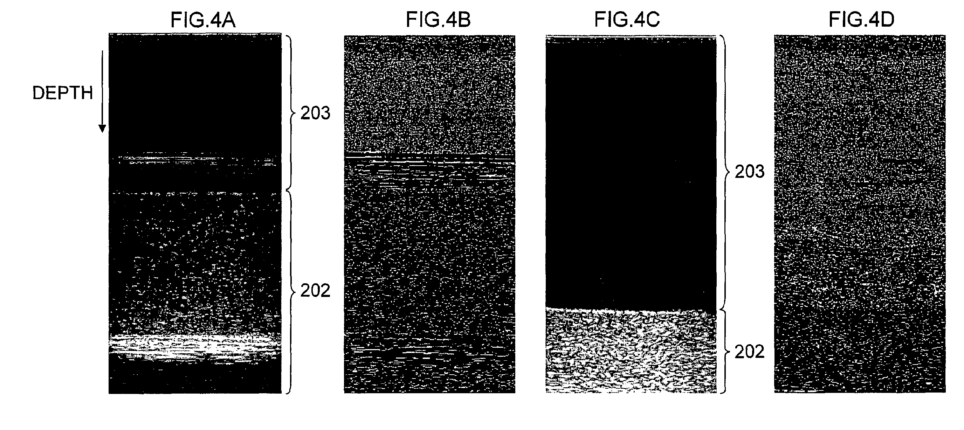

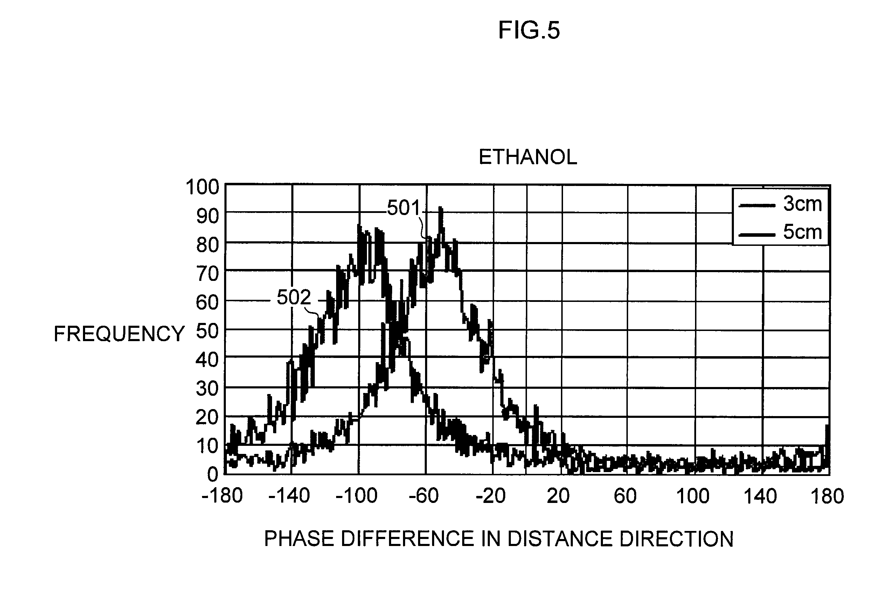

Fig. 2A is an amplitude tomogram of a subject comprising water 201 and agar 202. Fig. 2B is a phase difference tomogram of the subject shown in Fig. 2A. Fig. 2C is an amplitude tomogram of a subject in which a layer of the water 201 is thicker than in the subject shown in Fig. 2A. Fig. 2D is a phase difference tomogram of the subject shown in Fig. 2C. Fig. 3 is a histogram that shows a frequency distribution 301 of phase differences in a region of interest (depth of 30 mm and periphery thereof) in the phase difference tomogram shown in Fig. 2B, and a frequency distribution 302 of phase differences in a region of interest (depth of 50 mm and periphery thereof) in the phase difference tomogram shown in Fig. 2D. Fig. 4A is an amplitude tomogram of a subject comprising ethanol 203 and the agar 202. Fig. 4B is a phase difference tomogram of the subject shown in Fig. 4A. Fig. 4C is an amplitude tomogram of a subject in which a layer of the ethanol 203 is thicker than in the subject shown in Fig. 4A. Fig. 4D is a phase difference tomogram of the subject shown in Fig. 4C. Fig. 5 is a histogram that shows a frequency distribution 501 of phase differences in a region of interest (depth of 30 mm and periphery thereof) in the phase difference tomogram shown in Fig. 4B, and a frequency distribution 502 of phase differences in a region of interest (depth of 50 mm and periphery thereof) in the phase difference tomogram shown in Fig. 4D.

In this case, an amplitude tomogram is created based on the amplitude of a reception signal output from the ultrasound probe 20. More specifically, since a time (propagation time) from transmission of ultrasound pulses until reception of ultrasound echo pulses differs according to the depth of a reflection position, an amplitude tomogram is generated by associating propagation times with depths of reflection positions inside a subject and also associating amplitude values with densities (or colors) of pixels. Further, a phase difference tomogram is created based on phase differences of reception signals that are output from the ultrasound probe 20. More specifically, a phase difference tomogram is generated by associating propagation times with depths of reflection positions inside a subject and also associating phase difference values with densities (or colors) of pixels. Further, a frequency distribution of phase differences shows a frequency for each phase difference in a region of interest at a predetermined position and of a predetermined size in a phase difference tomogram. For example, the frequency distribution of phase differences is obtained by counting the number of pixels constituting a phase difference tomogram for each pixel value corresponding to a phase difference.

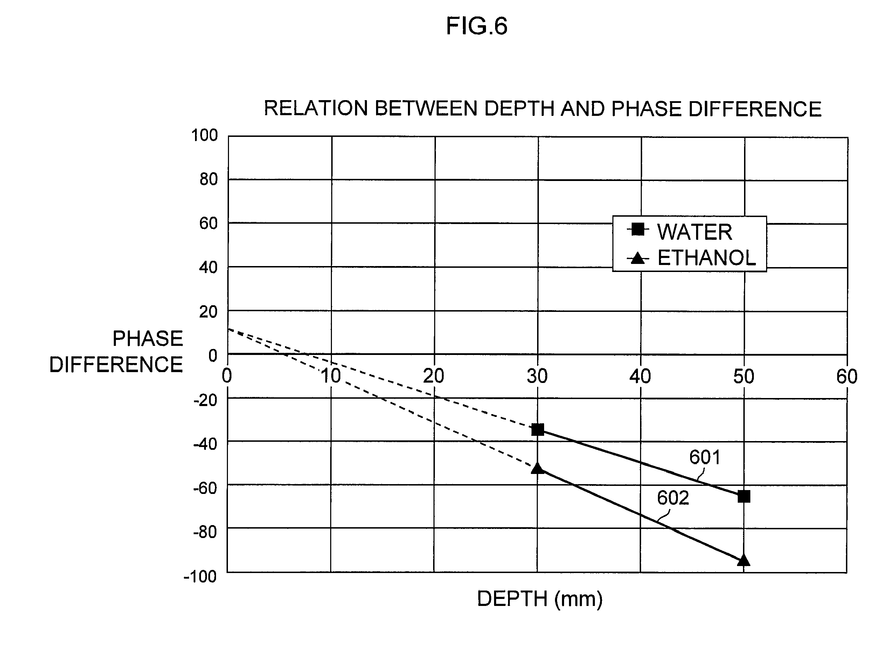

Fig. 6 is a view that illustrates the relation between depths of reflection positions inside a subject and phase differences. In Fig. 6, a straight line designated by reference numeral 601 shows changes in the phase difference in a depth direction with respect to ultrasound propagated through the water 201. Further, a straight line designated by reference numeral 602 shows changes in the phase difference in a depth direction with respect to ultrasound propagated through the ethanol 203. More specifically, the straight line designated by reference numeral 601 is obtained by plotting onto the chart shown in Fig. 6 the phase differences (center values) at which the frequencies in the frequency distributions 301 and 302 shown in Fig. 3 are greatest. Further, the straight line designated by reference numeral 602 is obtained by plotting onto the chart shown in Fig. 6 the phase differences (center values) at which the frequencies in the frequency distributions 501 and 502 shown in Fig. 5 are greatest. The slopes of the straight lines 601 and 602 are proportional to the attenuation factor of water and the attenuation factor of ethanol comprising the subjects, respectively. More specifically, a second-order differential value of a phase of an ultrasound echo in a depth direction of a subject is proportional to the attenuation factor of ultrasound in the substances constituting the subject.

According to the present invention, an attenuation factor of ultrasound within a subject is derived by determining the second-order differential value of a phase of an ultrasound echo in a depth direction of the subject. That is, an attenuation factor of ultrasound within a subject is derived from changes in the phase of an ultrasound echo in a depth direction of a subject.

Next, a case in which a Gaussian pulse (hereunder, also referred to as "Gaussian waveform") is transmitted as ultrasound from the ultrasound probe 20 is described specifically.

A frequency spectrum of a Gaussian pulse that is to be transmitted is given by formula 1.

[Formula 1]

$$A \times \exp(-(((f\text{-}f0)/\Delta w)^2))$$

Here, f denotes frequency, f0 denotes center frequency, $\Delta w$ denotes bandwidth, and A denotes amplitude.

Further, attenuation with respect to a depth x is given by formula 2.

[Formula 2]

$$T(x) \times \exp(-\alpha f x)$$

Here, T(x) denotes attenuation caused by diffusion, $\exp(-\alpha f x)$ denotes attenuation caused by absorption or dispersion and is dependent on frequency, and $\alpha$ denotes the attenuation factor.

For example, the frequency spectrum of a Gaussian pulse for depth x/2 that takes into account the round trip of the ultrasound is given by formula 3 based on formula 1 and formula 2.

[Formula 3]

$$A \times T(x) \times \exp(-\alpha f x) \times \exp(-(((f\text{-}f0)/\Delta w)^2))$$

The center frequency of a reflected wave of a Gaussian pulse from a depth x/2 shifts to $f0\text{-}(\alpha \times \Delta w^2 \times x/2)$, and is not f0. More specifically, the center frequency of a reflected wave becomes lower than that of the transmitted wave.

A reflected wave of a Gaussian pulse from a depth x is given by formula 4.

[Formula 4]

$$u(t) \times \cos(2\pi \times f(x) \times t + \phi_i(t))$$
$$= u(t) \times \cos(2\pi \times fd \times t + 2\pi(f(x)-fd) \times t + \phi_i(t))$$

Here, u(t) denotes amplitude, $\phi_i(t)$ denotes phase, f(x) denotes a center frequency of a reflected wave from depth x, and fd denotes a quadrature detection frequency. $\phi_i(t)$ includes a phase change that is produced by interference between reflected waves, that is, a speckle phase change component.

Based on formula 3, f(x) is expressed by formula 5. Provided that t=2x/v, where v denotes sound velocity.

[Formula 5]

$$f(x)=f0-(\alpha \times \Delta w^2 \times x)=f0-(\alpha \times \Delta w^2 \times v \times t/2)$$

The phase $\phi(t)$ after quadrature detection at frequency fd is expressed by $27\pi(f(x)-fd) \times t + \phi_i(t)$ from formula 4, and by substituting f(x) of formula 5, is expressed by formula 6.

[Formula 6]

$$\phi(t)=2\pi(f0-\alpha \times \Delta w^2 \times v \times t/2-fd) \times t + \phi_i(t)$$

By differentiating formula 6 with respect to t, i.e. by differentiating the phase with respect to the depth direction, formula 7 is obtained.

[Formula 7]

$$d\phi(t)/dt=$$
$$2\pi(f0-fd-\alpha \times \Delta w^2 \times v \times t)+d\phi_i(t)/dt$$

Omitting $d\phi_i(t)/dt$ from formula 7, that is, omitting a speckle component (interference component), will now be considered. For example, $d\phi_i(t)/dt$ can be omitted by employing a center value in a region of interest of a tomographic section as a phase difference $(d\phi(t)/dt)$, or by separating a tomographic section into speckle regions and non-speckle regions and averaging the phase differences of the non-speckle regions while excluding the phase differences of the speckle regions.

By further differentiating the phase difference $(d\phi(t)/dt)$ shown in formula 7 with respect to t, that is, by further differentiating in the depth direction, formula 8 is obtained.

[Formula 8]

$$d^2\phi/dt^2=-2\pi\alpha \times \Delta w^2 \times v$$

In formula 8, since the bandwidth $\Delta w$ is known, the attenuation $(\alpha \times v)$ per unit time is obtained. Accordingly, if the sound velocity v is obtained by a separate method, the attenuation per unit distance, i.e. the attenuation factor $\alpha$, can be obtained.

As described above, when a transmitted waveform is a Gaussian pulse, a differential value in a depth direction (distance direction) of a phase difference excluding a speckle component is proportional to the attenuation factor. More specifically, by transmitting a Gaussian pulse towards a subject from the ultrasound probe 20, performing quadrature detection of a reception signal output from the ultrasound probe 20, acquiring a phase $\phi(t)$ that shows the phase of an ultrasound echo, and determining a second-order differential value $(d^2\phi/dt^2)$ excluding a speckle component, the attenuation factor $\alpha$ can be derived easily and appropriately.

Although a case in which a Gaussian pulse is transmitted and a speckle component is excluded with respect to a phase difference is described as an example in order to facilitate the description of the principles of the present invention, the present invention is not particularly limited to such a case. A configuration may also be adopted in which a speckle component is excluded with respect to a second-order phase difference. It is also possible to transmit ultrasound waves other than Gaussian pulses towards a subject.

Hereunder, specific embodiments for implementing the present invention are described.

<Ultrasound diagnostic apparatus>

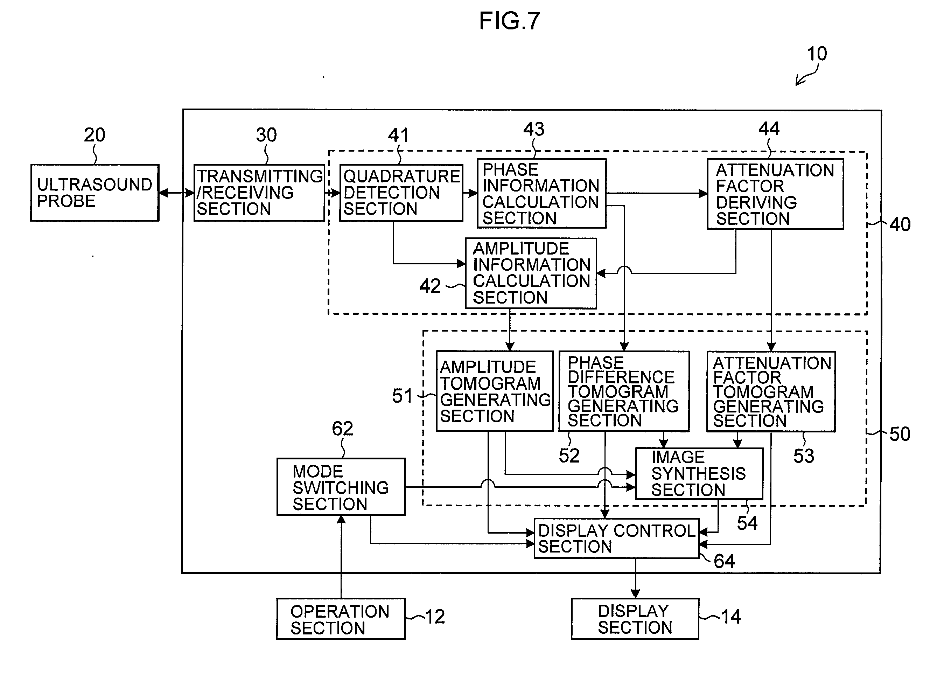

Fig. 7 is a block diagram that shows an example of the configuration of an ultrasound diagnostic apparatus including an ultrasound signal processing apparatus according to the present invention.

In Fig. 7, an ultrasound diagnostic apparatus 10 chiefly includes an operation section 12, a display section 14, an ultrasound probe 20, a transmitting/receiving section 30, a signal processing section 40, an image processing section 50, a mode switching section 62, and a display control section 64.

The operation section 12 is an instruction input device with which a user instruction is input. For example, the operation section 12 is constituted by a keyboard or a mouse.

The display section 14 is a display device capable of displaying images. For example, the display section 14 is constituted by an LCD (liquid crystal display).

The ultrasound probe 20 transmits ultrasound towards a subject, and receives an ultrasound echo that is reflected back from inside the subject. The ultrasound probe 20, for example, includes a plurality of ultrasound transducers that comprise a one-dimensional ultrasound transducer array. Each ultrasound transducer is configured, for example, by an oscillator which is a piezoelectric element, such as a PZT element, with electrodes formed at both ends. The ultrasound probe 20 may also be configured by a two-dimensional ultrasound transducer array.

The transmitting/receiving section 30 applies an ultrasound transmission signal such as a Gaussian pulse to the ultrasound probe 20 to thereby generate ultrasound at the ultrasound probe 20. When an ultrasound echo that is reflected back from inside the subject is received by the ultrasound probe 20, the ultrasound probe 20 outputs a reception signal that represents the ultrasound echo. Hence, after subjecting the aforementioned reception signal to amplification and A(analog)/D(digital) conversion, the transmitting/receiving section 30 performs reception focusing and inputs the signal to the signal processing section 40. By means of the reception focusing, reception data (sound ray data) of two sound rays or more is generated in the element arraying direction for a single ultrasound transmission. For example, it is sufficient to perform reception focusing as described in Japanese Patent Application Laid-Open No. 2008-167985.

The signal processing section 40 performs processing that acquires information that is useful for ultrasound diagnosis from the reception signal.

The signal processing section 40 of the present example includes a quadrature detection section 41, an amplitude information calculation section 42, a phase information calculation section 43, and an attenuation factor deriving section 44.

The quadrature detection section 41 performs quadrature detection with respect to a reception signal that represents an ultrasound echo.

A reception signal $y(t)$ is expressed by formula 9.

[Formula 9]

$$y(t)=u(t) \times \cos(\varpi t+\phi(t))$$

Here, $u(t)$ denotes amplitude, and $\phi(t)$ denotes phase.

As shown in formula 10, the reception signal $y(t)$ is separated into a real number component (cos component) and an imaginary number component (sin component) by quadrature detection. The real number component is also called an I component and the imaginary number component is also called a Q component.

[Formula 10]

$$I=u(t)\cos(\phi(t))$$

$$Q=u(t)\sin(\phi(t))$$

Based on the I component and the Q component that are obtained by the quadrature detection section 41, the amplitude information calculation section 42 calculates the amplitude $u(t)$ by formula 11.

[Formula 11]

$$u(t)=\sqrt{(I^2+Q^2)}$$

Based on the I component and the Q component that are obtained at the quadrature detection section 41, the phase information calculation section 43 calculates the phase $\phi(t)$ by formula 12.

[Formula 12]

$$\phi(t)=\tan^{-1}I/Q$$

The quadrature detection section 41 and the amplitude information calculation section 42 constitute an amplitude information acquisition device that acquires u(t) as amplitude information corresponding to the amplitude of the ultrasound echo. Further, the quadrature detection section 41 and the phase information calculation section 43 constitute a phase information acquisition device that acquires $\phi(t)$ as phase information that corresponds to the phase of the ultrasound echo.

The attenuation factor deriving section 44 derives changes in a phase $\phi(t)$ obtained by the phase information calculation section 43, and an attenuation factor of ultrasound in a depth direction inside the subject. More specifically, the attenuation factor deriving section 44 derives an attenuation factor based on changes in the phase of an ultrasound echo in a depth direction of the subject.

The image processing section 50 performs processing that generates an image based on information that is acquired by the signal processing section 40.

The image processing section 50 of the present example includes an amplitude tomogram generating section 51, a phase difference tomogram generating section 52, an attenuation factor tomogram generating section 53, and an image synthesis section 54.

The amplitude tomogram generating section 51 converts an amplitude u(t) that is calculated at the amplitude information calculation section 42 to amplitude information corresponding to each reflection position in a tomographic section (diagnosis site cross-section) of the subject. Further, the amplitude tomogram generating section 51 performs a logarithmic amplification process or correction of attenuation corresponding to each depth at ultrasound reflection positions and the like, and generates an amplitude tomogram (B mode tomogram) as an amplitude image showing the amplitude of an ultrasound echo from each reflection position in a tomographic section of the subject.

The phase difference tomogram generating section 52 converts a phase $\phi(t)$ that is calculated at the phase information calculation section 43 to phase difference information corresponding to each reflection position in a tomographic section (cross-section of diagnosing region) of the subject, and generates a phase difference tomogram as a phase difference image that shows phase differences of an ultrasound echo from each reflection position in the tomographic section of the subject.

The attenuation factor tomogram generating section 53 converts an attenuation factor that is derived by the attenuation factor deriving section 44 into attenuation factor information corresponding to each reflection position in a tomographic section (cross-section of diagnosing region) of the subject, and generates an attenuation factor tomogram as an attenuation factor image that shows the attenuation factors of ultrasound at each reflection position in a tomographic section of the subject.

The image synthesis section 54 selects and synthesizes required images in accordance with an instruction from the mode switching section 62 from among the amplitude tomogram generated by the amplitude tomogram generating section 51, the phase difference tomogram generated by the phase difference tomogram generating section 52, and the attenuation factor tomogram generated by the attenuation factor tomogram generating section 53. The image synthesis section 54, for example, superimposes the amplitude tomogram and the phase difference tomogram with respect to each other by modulating the brightness or color of the amplitude tomogram in accordance with the phase difference tomogram. Further, for example, the image synthesis section 54 superimposes the amplitude tomogram and the attenuation factor tomogram with respect to each other by modulating the brightness or color of the amplitude tomogram in accordance with the attenuation factor tomogram. The image synthesis section 54 may also superimpose the amplitude tomogram, the phase difference tomogram, and the attenuation factor tomogram with respect to each other. An image that is synthesized with the image synthesis section 54 is input as a video signal to the display section 14 via the display control section 64.

The display control section 64 selects an arbitrary image in accordance with an instruction from the mode switching section 62 from among the amplitude tomogram, the phase difference tomogram, the attenuation factor tomogram, and images that are synthesized by the image synthesis section 54, performs enlargement/reduction processing and layout processing on the selected image, and inputs the image to the display section 14. Various combinations of images may be displayed. For example, the amplitude tomogram and the attenuation factor tomogram may be arranged side by side and displayed on the display section 14. A synthesized image of the amplitude tomogram and the attenuation factor tomogram may also be displayed side by side with the amplitude tomogram. Alternatively, only the attenuation factor tomogram or only a synthesized image may be displayed.

The mode switching section 62 switches image display modes. For example, the mode switching section 62 switches between a mode that displays an attenuation factor tomogram (attenuation factor tomogram display mode) and a mode that does not display an attenuation factor tomogram (attenuation factor tomogram non-display mode). Further, for example, the mode switching section 62 switches between a mode (superimposed display mode) that superimposes an amplitude tomogram and an attenuation factor tomogram with respect to each other and displays the superimposed image, and a mode that displays an amplitude tomogram and an attenuation factor tomogram side by side without superimposing these tomograms (side-by-side display mode).

In the present example, the resolution of a phase in the arraying direction of the elements of the ultrasound probe 20 is greater or equal to an interval between the elements of the ultrasound probe 20. That is, the resolution in the element arraying direction of phase information calculated at the phase information calculation section 43 is greater than or equal to an interval between the elements (for example, ultrasound transducers) of the ultrasound probe 20.

The signal processing section 40, the image processing section 50, the mode switching section 62, and the display control section 64, for example, are constituted by a CPU (Central Processing Unit). A part of these components may also be constituted by a circuit.

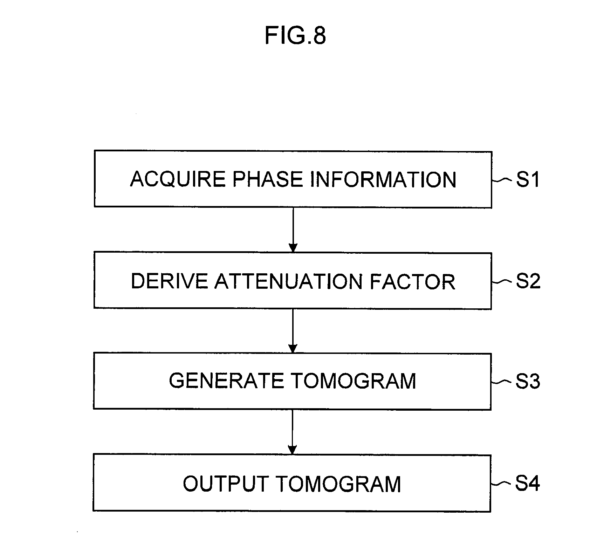

Fig. 8 is a view that illustrates an abbreviated flow of one example of ultrasound signal processing according to the present invention.

In step S1, phase information that shows the phase of an ultrasound echo in a depth direction of a subject is acquired from a reception signal of an ultrasound echo. More specifically, when ultrasound is transmitted towards a subject from the ultrasound probe 20 and an ultrasound echo from inside the subject is received by the ultrasound probe 20, a reception signal y(t) that represents the ultrasound echo is output from the transmitting/receiving section 30, and a phase $\phi(t)$ is acquired from the reception signal y(t) by the quadrature detection section 41 and the phase information calculation section 43.

In step S2, an attenuation factor $\alpha$ of ultrasound inside the subject is derived based on changes in the phase of the ultrasound echo in the depth direction of the subject. More specifically, the attenuation factor deriving section 44 derives the attenuation factor $\alpha$ by determining a second-order differential value $(d^2\phi/dt^2)$ of the phase $\phi(t)$. A specific example of this attenuation factor derivation processing is described in detail later.

In step S3, various kinds of tomograms are generated. More specifically, an amplitude tomogram is generated by the amplitude tomogram generating section 51 based on an amplitude u(t) that is calculated by the amplitude information calculation section 42. Further, a phase difference tomogram is generated by the phase difference tomogram generating section 52 based on phases $\phi(t)$ calculated by the phase information calculation section 43. Furthermore, an attenuation factor tomogram is generated by the attenuation factor tomogram generating section 53 based on attenuation factors calculated by the attenuation factor deriving section 44. Further, a synthesized image is generated by the image synthesis section 54.

In step S4, various kinds of tomograms are output. More specifically, various kinds of tomograms are output to the display section 14 by the display control section 64 in accordance with the display mode that is switched to by the mode switching section 62.

<Attenuation factor deriving section and attenuation factor derivation processing>

Hereunder, the attenuation factor deriving section 44 and attenuation factor derivation processing are described by dividing the description among various embodiments.

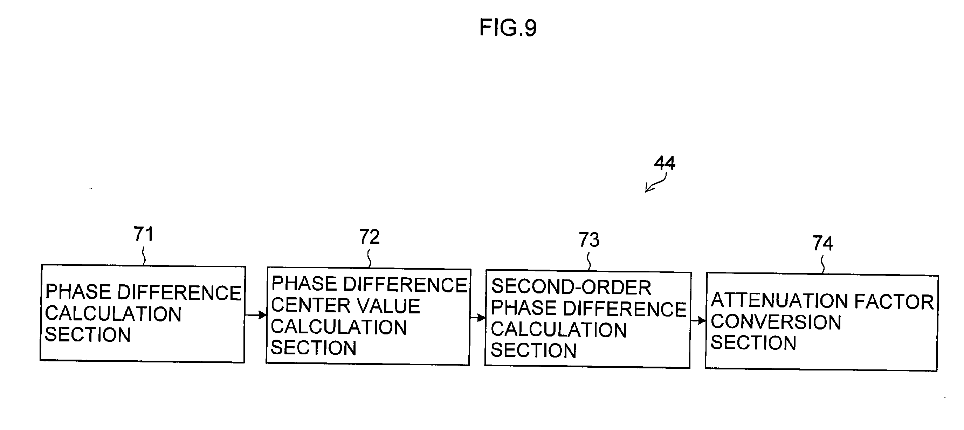

Fig. 9 is a block diagram that shows the configuration of the attenuation factor deriving section 44 according to the first embodiment.

The attenuation factor deriving section 44 of the present embodiment comprises a phase difference calculation section 71, a phase difference center value calculation section 72, a second-order phase difference calculation section 73, and an attenuation factor conversion section 74. The phase difference calculation section 71 calculates phase differences (first-order differential value of a phase) of an ultrasound echo corresponding to each reflection position inside a subject by differentiating a phase $\phi(t)$ of a reception signal representing an ultrasound echo with respect to t, that is, by differentiating the phase with respect to the depth direction of the subject. The phase difference center value calculation section 72 calculates a center value (representative value) of the phase differences in each region of interest that are centered on each reflection position inside the subject. The second-order phase difference calculation section 73 calculates second-order phase differences (second-order differential value of phase) of an ultrasound echo corresponding to each reflection position within a subject by differentiating a center value of the phase differences calculated by the phase difference center value calculation section 72 with respect to t, that is, by differentiating a center value of the phase differences with respect to the depth direction inside the subject. The attenuation factor conversion section 74 converts a second-order phase difference calculated by the second-order phase difference calculation section 73 into an attenuation factor.

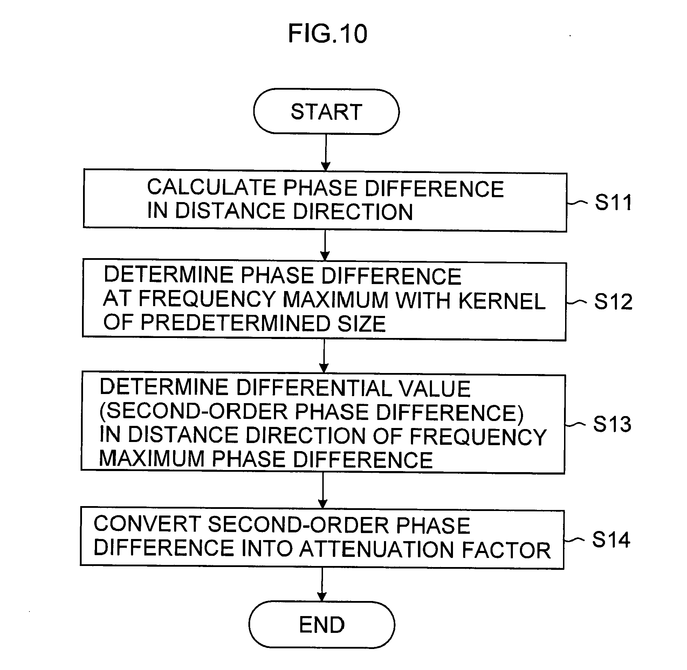

Fig. 10 is a flowchart showing one example of the flow of attenuation factor derivation processing according to the first embodiment. The present processing is executed in accordance with a program by a CPU comprising the attenuation factor deriving section 44.

In step S11, phase differences of an ultrasound echo corresponding to each reflection position in a depth direction (distance direction) of a subject are calculated by the phase difference calculation section 71.

According to this example, the phase difference calculation section 71 calculates a phase difference $(d\phi(t)/dt)$ of an ultrasound echo corresponding to each reflection position within a subject by differentiating a phase $\phi(t)$ that is calculated with the phase information calculation section (designated by reference numeral 43 in Fig. 7) with respect to t, that is, by differentiating the phase with respect to the depth direction of the subject.

In this connection, at the phase difference tomogram generating section (designated by reference numeral 52 in Fig. 7), a phase difference tomogram is generated that shows phase differences that correspond to each reflection position in a tomographic section of the inside of the subject.

In step S 12, the phase difference center value calculation section 72 determines a phase difference (center value of phase difference) that is the frequency maximum in each region of interest at a kernel of a predetermined size as a representative value of the phase difference in each region of interest.

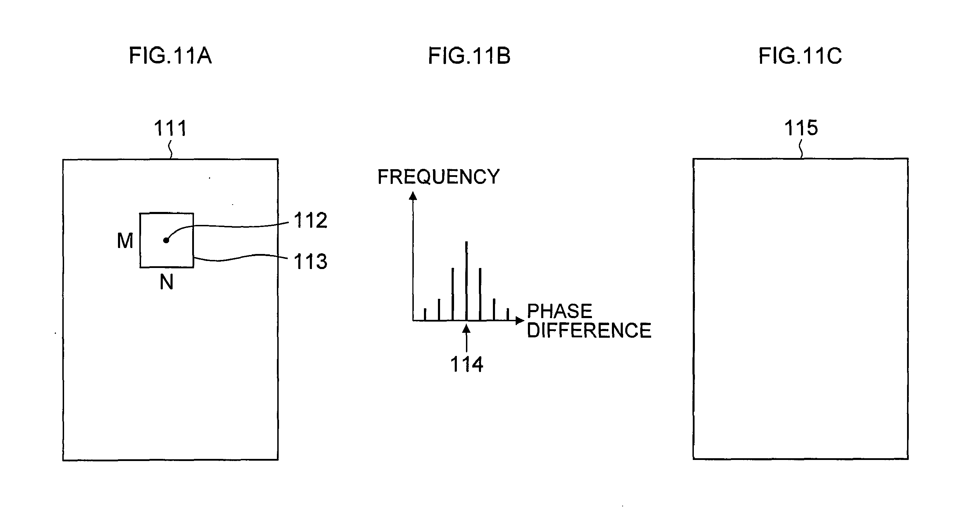

For example, first, as shown in Fig. 11A, the phase difference center value calculation section 72 sequentially focuses attention on each pixel 112 comprising a phase difference tomogram 111, and takes as a region of interest 113 a region that comprises N×M pixels (for example, 5×5 pixels) that is centered on the pixel 112 on which interest is focused. Next, as shown in Fig. 11 (B), the phase difference center value calculation section 72 detects a frequency of the phase difference for each region of interest 113, and determines a phase difference 114 that is the frequency maximum as a representative value of the phase difference for each region of interest. More specifically, since a pixel value corresponds to a phase difference, the number of pixels is counted for each pixel value. In this manner, the representative value 114 of the phase difference is determined for each region of interest 113 corresponding to each pixel 112 inside the phase difference tomogram 111. Thereby, a phase difference tomogram (designated by reference numeral 115 in Fig. 11 C) that comprises the representative values 114 that respectively correspond to each pixel 112 is generated.

In step S 13, a differential value (second-order phase difference) of the representative values of the phase differences corresponding to each reflection position in the depth direction (distance direction) of the subject is determined by the second-order phase difference calculation section 73.

According to the present example, a second-order phase difference $(d^2\phi/dt^2)$ corresponding to each reflection position is calculated by determining a difference between representative values of adjoining phase differences in the depth direction of a subject, that is, by differentiating representative values of phase differences calculated by the second-order phase difference calculation section 73 with respect to the depth direction of the subject.

In step S 14, the second-order phase differences calculated by the second-order phase difference calculation section 73 are converted to attenuation factors by the attenuation factor conversion section 74. According to the present example, attenuation factors that correspond to each reflection position within the subject are obtained.

In this connection, the attenuation factor tomogram generating section (designated by reference numeral 53 in Fig. 7) generates an attenuation factor tomogram showing attenuation factors that correspond to each reflection position in a tomographic section of the inside of the subject.

A method that converts second-order phase differences to attenuation factors may use a conversion table, and in the case of a Gaussian pulse, since attenuation factors are proportional to second-order phase differences, attenuation factors may be calculated using the aforementioned formula 8. Further, in the case of a Gaussian pulse, since the attenuation factors are proportional to the second-order phase differences, it is also possible to use the second-order phase differences as they are without converting the second-order phase differences into attenuation factors.

In this connection, although a case in which phase differences as the frequency maximum in each region of interest are employed as representative values has been described as one example of the present embodiment, a configuration may also be adopted in which a mean value of phase differences within each region of interest is employed as a representative value of the phase differences for each region of interest. In this case, a configuration may also be adopted in which the mean value of phase differences in only non-speckle regions inside each region of interest is employed as a representative value of the phase differences for each region of interest. A non-speckle region, for example, may also be taken as a region in which an amplitude value exceeds a threshold value, or may be taken as a region in which an amplitude value is greater than a predetermined proportion of a mean value within the region of interest or greater than a mean value from which a predetermined amount has been subtracted. A non-speckle region may also be distinguished based on phase differences.

Although according to the present embodiment a second-order phase difference (second-order differential value of phase) is determined after determining a phase difference (first-order differential value of phase) and excluding a speckle component, the second-order phase difference may also be determined directly from the phase $\phi(t)$.

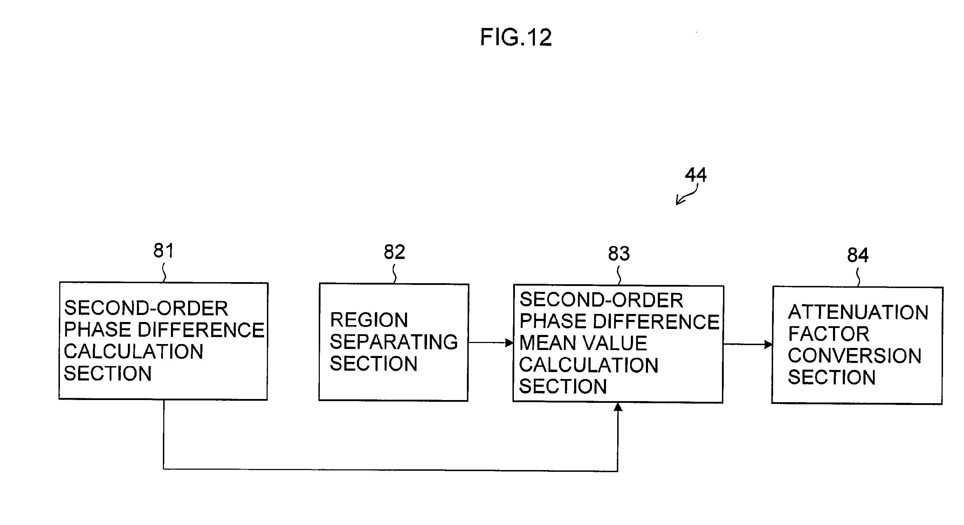

Fig. 12 is a block diagram that shows the configuration of the attenuation factor deriving section 44 according to the second embodiment.

The attenuation factor deriving section 44 of the present embodiment comprises a second-order phase difference calculation section 81, a region separating section 82, a second-order phase difference mean value calculation section 83, and an attenuation factor conversion section 84. The second-order phase difference calculation section 81 calculates a second-order phase difference (second-order differential value of the phase) of an ultrasound echo corresponding to each reflection position inside a subject by differentiating a phase $\phi(t)$ of a reception signal that represents an ultrasound echo with respect to t twice, that is, by differentiating a phase with respect to the depth direction of the subject twice. The region separating section 82 separates a tomographic section of the subject into speckle regions and non-speckle regions. The second-order phase difference mean value calculation section 83 calculates a second-order phase difference mean value of only pixels belonging to non-speckle regions in each region of interest that is centered on each reflection position inside the subject. The attenuation factor conversion section 84 converts a mean value of second-order phase differences calculated with the second-order phase difference mean value calculation section 83 into an attenuation factor.

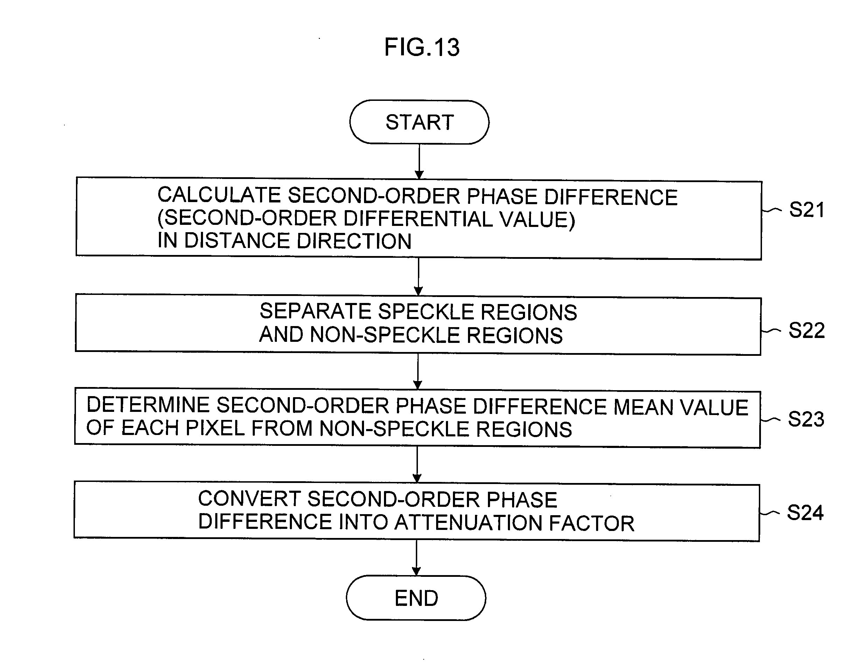

Fig. 13 is a flowchart that shows an example of the flow of attenuation factor derivation processing in the second embodiment. This processing is executed in accordance with a program by a CPU comprising the attenuation factor deriving section 44.

In step S21, second-order phase differences of an ultrasound echo corresponding to each reflection position in the depth direction (distance direction) of the subject are calculated by the second-order phase difference calculation section 81.

In this example, the second-order phase difference calculation section 81 calculates second-order phase differences (second-order differential values of the phase) of an ultrasound echo corresponding to each reflection position inside the subject by differentiating a phase $\phi(t)$ that is calculated with the phase information calculation section (designated by reference numeral 43 in Fig. 7) with respect to t twice, that is, by differentiating the phase with respect to the depth direction of the subject twice.

In step S22, a tomographic section of the subject is separated into speckle regions and non-speckle regions by the region separating section 82.

According to the present example, the region separating section 82 separates regions based on the amplitude $u(t)$ calculated with the amplitude information calculation section (designated by reference numeral 42 in Fig. 7). For example, the region separating section 82 sequentially focuses interest on each pixel comprising an amplitude tomogram generated by the amplitude tomogram generating section (designated by reference numeral 51 in Fig. 7), and when an amplitude value for the pixel on which interest is focused is greater than a predetermined threshold value, the region separating section 82 determines that the pixel of interest belongs to a non-speckle region. When the amplitude value for the pixel of interest is less than or equal to a threshold value, the region separating section 82 determines that the pixel of interest belongs to a speckle region. Thus, the region separating section 82 determines whether a pixel belongs to a speckle region or a non-speckle region for each reflection position of a tomographic section of the subject.

A configuration may also be adopted in which a region comprising $N \times M$ pixels (for example, $5 \times 5$ pixels) that is centered on the pixel of interest is taken as a region of interest. In this case, when an amplitude value at the pixel of interest is smaller than a predetermined proportion of a mean value within the region of interest or a mean value from which a predetermined amount has been subtracted, it is determined that the pixel of interest belongs to a speckle region. In contrast, when the amplitude value is larger than the aforementioned value, it is determined that the pixel of interest belongs to a non-speckle region.

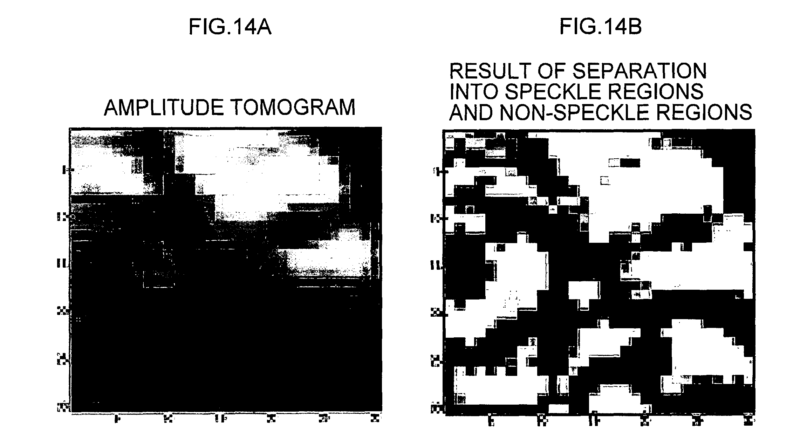

An example of a result obtained by separating a tomographic section into non-speckle regions and speckle regions is shown in Figs. 14A and 14B.

In step S23, mean values of second-order phase differences of only non-speckle regions within region of interests of a predetermined size that are centered on each pixel are determined as second-order phase differences for each pixel.

In step S24, the attenuation factor conversion section 84 converts the second-order phase differences into attenuation factors.

According to the present example, attenuation factors corresponding to each pixel in the tomographic section of the subject are obtained based on second-order phase differences for each pixel that are calculated by the second-order phase difference mean value calculation section 83.

According to the present embodiment, attenuation factors are determined by excluding low echo regions (speckle regions) that are produced by random interference (speckle) in an ultrasound echo (reflected wave) from a plurality of reflectors inside a subject. Since a speckle becomes a low echo produced by interferences that cancel each other out, by distinguishing a speckle region based on amplitude information and then determining attenuation factors in a manner that excludes the speckle region, it is possible to obtain accurate attenuation factors from which phase change components produced by interference are excluded.

A configuration may also be adopted in which the user separates a tomographic section of a subject into speckle regions and non-speckle regions. That is, a configuration may be adopted in which a tomogram (amplitude tomogram, phase difference tomogram, synthesized image, or the like) is displayed on the display control section 64 by the display section 14, and the user is allowed to designate non-speckle regions (or speckle regions) using the operation section 12.

An outline of an example in which regions are separated based on phase differences will now be described. Since a speckle is produced by random interference in an ultrasound echo, phase differences in a reception signal increase when a speckle occurs. Therefore, phase differences corresponding to each reflection position (or region of interest) are determined based on a phase $\phi(t)$ that is acquired from the reception signal, and when a phase difference is greater than a threshold value it is determined that the relevant reflection position (or region of interest) belongs to a speckle region. Preferably, phase differences used for separating regions are calculated in both the depth direction of the subject and the element arraying direction.

Although only examples in which the present invention determines attenuation factors for respective pixels have been described in the foregoing, the present invention may also separate regions for each tissue in an amplitude tomogram, and determine a mean attenuation factor for each region. A configuration may also be adopted in which regions are separated for respective tissues in accordance with a designation by the user, or in which regions are separated based on differences in the mean or dispersion of amplitudes or based on differences in frequency spectra in the scan direction. Regions may also be separated based on speckle density.

Recent software-based ultrasound apparatuses hold reception signals as digital data, and for example, it has become possible to generate RF data (reception data that has been subjected to reception focusing) of two sound rays or more in an azimuth direction by utilizing reception signals obtained from the same transmission (single transmission). The same effect can also be achieved with an analog-based circuit configuration that has advanced functions. According to this apparatus configuration, since adjoining sound ray data or frame RF data can be obtained at a high speed, phase information can be calculated with a high degree of accuracy.

It should be understood that the present invention is not limited to the examples described in the present specification or the examples illustrated in the drawings, and naturally various design changes and modifications can be made thereto without departing from the spirit and scope of the present invention.

**Claims**

1. An ultrasound signal processing apparatus (10), comprising:

   an ultrasound transmitting/receiving device (20, 30) which transmits ultrasound towards a subject (90) and receives an ultrasound echo from inside the subject to generate a reception signal that represents the ultrasound echo;
   a phase information acquisition device (43) which acquires phase information showing a phase of the ultrasound echo from the reception signal; and
   an attenuation factor deriving device (44) which derives an attenuation factor of the ultrasound inside the subject based on changes in the phase of the ultrasound echo in a depth direction of the subject.

2. The ultrasound signal processing apparatus (10) according to claim 1, wherein the attenuation factor deriving device (44) derives the attenuation factor by determining a second-order differential value of the phase of the ultrasound echo in the depth direction of the subject (90).

3. The ultrasound signal processing apparatus (10) according to claim 1 or 2, wherein the attenuation factor deriving device (44) derives the attenuation factor based on a phase change excluding a speckle component.

4. The ultrasound signal processing apparatus (10) according to claim 3, wherein the attenuation factor deriving device (44) derives the attenuation factor by taking a phase difference for which a frequency is greatest in a region of interest of a tomographic section of the subject as a representative value of the region of interest, and differentiating the representative value with respect to the depth direction.

5. The ultrasound signal processing apparatus (10) according to claim 3, wherein the attenuation factor deriving device (44) derives the attenuation factor by dividing a tomographic section of the subject into speckle regions and non-speckle regions, determining a mean value of phase differences belonging to the non-speckle regions for each region of interest, taking the mean value as a representative value of the region of interest, and differentiating the representative value with respect to the depth direction.

6. The ultrasound signal processing apparatus (10) according to claim 3, wherein the attenuation factor deriving device (44) derives the attenuation factor by dividing a tomographic section of the subject into speckle regions and non-speckle regions, and determining a second-order differential value of phases of the ultrasound echo belonging to the non-speckle regions.

7. The ultrasound signal processing apparatus (10) according to any one of claims 1 to 6, wherein the ultrasound transmitting/receiving device (20, 30) transmits a Gaussian pulse.

8. The ultrasound signal processing apparatus (10) according to any one of claims 1 to 7, wherein the phase information acquisition device (43) utilizes data in which a resolution of a phase in an arraying direction of elements (20) of the ultrasound transmitting/receiving device (20, 30) is equal to or greater than an interval between the elements.

9. The ultrasound signal processing apparatus (10) according to any one of claims 1 to 8, wherein the ultrasound transmitting/receiving device (20, 30) is capable of generating the reception data of two sound rays or more in an arraying direction of the elements (20) of the ultrasound transmitting/receiving device with a single ultrasound transmission, and
the phase information acquisition device (43) utilizes the reception data of two sound rays or more that is generated with the ultrasound transmitting/receiving device.

10. The ultrasound signal processing apparatus (10) according to any one of claims 1 to 9, further comprising an attenuation factor tomogram generating device (53) which generates an attenuation factor tomogram that shows a distribution of attenuation factors in a tomographic section of the subject based on the attenuation factors derived by the attenuation factor deriving device (44).

11. The ultrasound signal processing apparatus (10) according to claim 10, further comprising:

an amplitude information acquisition device (42) which acquires amplitude information that shows an amplitude of the ultrasound echo from a reception signal of the ultrasound echo;
an amplitude tomogram generating device (51) which generates an amplitude tomogram based on the amplitude information acquired with the amplitude information acquisition device; and
an image synthesis device (54) which superimposes the attenuation factor tomogram and the amplitude tomogram with respect to each other.

12. The ultrasound signal processing apparatus (10) according to claim 11, wherein the image synthesis device (54) modulates a brightness or a color of the amplitude tomogram in accordance with the attenuation factor tomogram.

13. The ultrasound signal processing apparatus (10) according to claim 10, further comprising:

an amplitude information acquisition device (42) which acquires amplitude information showing an amplitude of the ultrasound echo from a reception signal of the ultrasound echo;
an amplitude tomogram generating device (51) which generates an amplitude tomogram based on the amplitude information that is acquired with the amplitude information acquisition device;
a display section (14) which is capable of displaying an image; and
a display control device (64) which performs control to cause the attenuation factor tomogram and the amplitude tomogram to be displayed side by side on the display section.

14. The ultrasound signal processing apparatus (10) according to any one of claims 8 to 11, further comprising a mode switching device (62) which switches between a mode that outputs the attenuation factor tomogram and a mode that does not output the attenuation factor tomogram.

15. The ultrasound signal processing apparatus (10) according to claim 11 or 12, further comprising a mode switching device (62) which switches between a mode that synthesizes the attenuation factor tomogram and the amplitude tomogram and a mode which does not synthesize the amplitude tomogram.

16. An ultrasound signal processing method, comprising the steps of:

transmitting ultrasound towards a subject and receiving an ultrasound echo from the subject (90);
acquiring (S1) phase information that shows a phase of the ultrasound echo from a reception signal that represents the ultrasound echo; and
deriving (S2) an attenuation factor of the ultrasound inside the subject based on changes in the phase of the ultrasound echo in a depth direction of the subject.

EP 2 169 426 A1

# FIG.1

ELEMENT ARRAYING DIRECTION

~20

DEPTH
DIRECTION

~90

FIG.2A  FIG.2B  FIG.2C  FIG.2D

DEPTH

201

202

SCAN DIRECTION

201

202

EP 2 169 426 A1

# FIG.3

WATER

FREQUENCY vs PHASE DIFFERENCE IN DISTANCE DIRECTION (/180°)

EP 2 169 426 A1

FIG.4A    FIG.4B    FIG.4C    FIG.4D

DEPTH

203

202

203

202

FIG.5

ETHANOL

PHASE DIFFERENCE IN DISTANCE DIRECTION

EP 2 169 426 A1

# FIG.6

RELATION BETWEEN DEPTH AND PHASE DIFFERENCE

EP 2 169 426 A1

# FIG.7

## FIG.8

```
┌─────────────────────────────────┐
│   ACQUIRE PHASE INFORMATION      │~ S1
└─────────────────────────────────┘
              │
              ▼
┌─────────────────────────────────┐
│   DERIVE ATTENUATION FACTOR      │~ S2
└─────────────────────────────────┘
              │
              ▼
┌─────────────────────────────────┐
│      GENERATE TOMOGRAM           │~ S3
└─────────────────────────────────┘
              │
              ▼
┌─────────────────────────────────┐
│       OUTPUT TOMOGRAM            │~ S4
└─────────────────────────────────┘
```

FIG.9

EP 2 169 426 A1

44

| 71 | 72 | 73 | 74 |
|---|---|---|---|
| PHASE DIFFERENCE CALCULATION SECTION | PHASE DIFFERENCE CENTER VALUE CALCULATION SECTION | SECOND-ORDER PHASE DIFFERENCE CALCULATION SECTION | ATTENUATION FACTOR CONVERSION SECTION |

## FIG.10

EP 2 169 426 A1

```
                    ┌─────────────┐
                    │    START    │
                    └─────────────┘
                           │
                           ▼
        ┌────────────────────────────────────┐
        │     CALCULATE PHASE DIFFERENCE      │─── S11
        │        IN DISTANCE DIRECTION        │
        └────────────────────────────────────┘
                           │
                           ▼
        ┌────────────────────────────────────┐
        │    DETERMINE PHASE DIFFERENCE       │
        │ AT FREQUENCY MAXIMUM WITH KERNEL    │─── S12
        │      OF PREDETERMINED SIZE          │
        └────────────────────────────────────┘
                           │
                           ▼
        ┌────────────────────────────────────┐
        │   DETERMINE DIFFERENTIAL VALUE      │
        │ (SECOND-ORDER PHASE DIFFERENCE)     │
        │ IN DISTANCE DIRECTION OF FREQUENCY  │─── S13
        │    MAXIMUM PHASE DIFFERENCE         │
        └────────────────────────────────────┘
                           │
                           ▼
        ┌────────────────────────────────────┐
        │   CONVERT SECOND-ORDER PHASE        │
        │ DIFFERENCE INTO ATTENUATION FACTOR  │─── S14
        └────────────────────────────────────┘
                           │
                           ▼
                    ┌─────────────┐
                    │     END     │
                    └─────────────┘
```

FIG.11A

111

M

N

112

113

FIG.11B

FREQUENCY

PHASE
DIFFERENCE

114

FIG.11C

115

EP 2 169 426 A1

FIG.12

## FIG.13

START

CALCULATE SECOND-ORDER PHASE DIFFERENCE
(SECOND-ORDER DIFFERENTIAL VALUE)
IN DISTANCE DIRECTION — S21

SEPARATE SPECKLE REGIONS
AND NON-SPECKLE REGIONS — S22

DETERMINE SECOND-ORDER PHASE DIFFERENCE MEAN VALUE
OF EACH PIXEL FROM NON-SPECKLE REGIONS — S23

CONVERT SECOND-ORDER PHASE
DIFFERENCE INTO ATTENUATION FACTOR — S24

END

EP 2 169 426 A1

## FIG.14A

AMPLITUDE TOMOGRAM

## FIG.14B

RESULT OF SEPARATION
INTO SPECKLE REGIONS
AND NON-SPECKLE REGIONS

EP 2 169 426 A1

Europäisches
Patentamt

European
Patent Office

Office européen
des brevets

## EUROPEAN SEARCH REPORT

Application Number

EP 09 01 2104

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 0 150 997 A2 (FUJITSU LTD [JP]) 7 August 1985 (1985-08-07) * abstract; figures 2, 10 * * page 3, line 2 - line 16 * * page 12, line 13 - page 35 * * page 15, line 28 - page 16, line 11 * * page 22, line 4 - line 29 * * page 24, line 13 - line 28 * * page 31, line 2 - line 24 * ----- | 1-16 | INV. G01S7/52 G01S15/89 G06T5/00 G06T5/20 |
| X | BEVAN P D ET AL: "B-scan ultrasound imaging of thermal coagulation in bovine liver: frequency shift attenuation mapping" ULTRASOUND IN MEDICINE AND BIOLOGY, NEW YORK, NY, US, vol. 27, no. 6, 1 June 2001 (2001-06-01), pages 809-817, XP004247076 ISSN: 0301-5629 * figures 1,2 * * page 811, left-hand column, line 4 - line 14 * * page 814, right-hand column, line 5 - line 11 * ----- | 1-2,16 | |
| A | US 5 882 307 A (WRIGHT J NELSON [US] ET AL) 16 March 1999 (1999-03-16) * abstract; figures 2a,2b * * column 12, line 50 - line 64 * ----- | 9 | TECHNICAL FIELDS SEARCHED (IPC) G01S G06T |
| A | WO 2006/113445 A1 (VERASONICS INC [US]; DAIGLE RONALD ELVIN [US]) 26 October 2006 (2006-10-26) * abstract; figure 5 * * page 12, line 20 - page 16, line 7 * ----- | 9 | |
| A | US 4 441 368 A (FLAX STEPHEN W [US]) 10 April 1984 (1984-04-10) * the whole document * ----- | 1-16 | |

The present search report has been drawn up for all claims

| Place of search | Date of completion of the search | Examiner |
|---|---|---|
| Munich | 26 October 2009 | Knoll, Bernhard |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**ANNEX TO THE EUROPEAN SEARCH REPORT
ON EUROPEAN PATENT APPLICATION NO.**

EP 09 01 2104

This annex lists the patent family members relating to the patent documents cited in the above-mentioned European search report.
The members are as contained in the European Patent Office EDP file on
The European Patent Office is in no way liable for these particulars which are merely given for the purpose of information.

26-10-2009

| Patent document cited in search report | | Publication date | Patent family member(s) | | Publication date |
|---|---|---|---|---|---|
| EP 0150997 | A2 | 07-08-1985 | DE | 3585694 D1 | 30-04-1992 |
| | | | US | 4648276 A | 10-03-1987 |
| US 5882307 | A | 16-03-1999 | US | 5827188 A | 27-10-1998 |
| WO 2006113445 | A1 | 26-10-2006 | CA | 2604649 A1 | 26-10-2006 |
| | | | CN | 101203183 A | 18-06-2008 |
| | | | EP | 1874192 A1 | 09-01-2008 |
| | | | JP | 2008536578 T | 11-09-2008 |
| | | | KR | 20080015082 A | 18-02-2008 |
| | | | US | 2009112095 A1 | 30-04-2009 |
| US 4441368 | A | 10-04-1984 | JP | 59122919 A | 16-07-1984 |

EPO FORM P0459

For more details about this annex : see Official Journal of the European Patent Office, No. 12/82

**EP 2 169 426 A1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 7051270 A

- JP 2008167985 A